# EUROPÄISCHE PATENTSCHRIFT

(11) **EP 0 868 115 B1**
(45) Veröffentlichungstag und Bekanntmachung des Hinweises auf die Patenterteilung: **20.08.2003**
(21) Anmeldenummer: 98103988.6
(22) Anmeldetag: 06.03.1998
(51) Int. Cl.: H05B 41/04, H05B 41/18, H05B 41/231

(54) **Schaltung zur Zündung einer HID-Lampe**
Circuit for ignition of a HID lamp
Circuit d'amorçage pour lampe HID

(30) Priorität: 24.03.1997 DE 19712258
(43) Veröffentlichungstag der Anmeldung: 30.09.1998
(73) Patentinhaber: Patent-Treuhand-Gesellschaft für elektrische Glühlampen mbH, 81543 München (DE)
(72) Erfinder: Huber, Andreas, 82216 Maisach (DE); Niedermeier, Peter, 80995 München (DE)

(56) Entgegenhaltungen:
- DE-A1- 3 925 993
- GB-A- 2 013 050
- GB-A- 2 039 428

## Beschreibung

### Technisches Gebiet

Die vorliegende Erfindung betrifft eine Schaltung zur Zündung einer Hochdruckentladungslampe, mit einem Zündübertrager, dessen Sekundärseite mit der zündenden Lampe und dessen Primärseite mit einer den Zündimpuls auslösenden Schaltung verbunden ist.

### Stand der Technik

Grundsätzlich können Zündschaltungen für Hochdruckentladungslampen mit zweierlei Arten von Vorschaltgeräten zusammen betrieben werden: konventionelle Vorschaltgeräte (KVG) und elektronische Vorschaltgeräte (EVG).

Bei KVGs dient meist eine Eisendrossel zur Strombegrenzung einer gezündeten Hochdruckentladungslampe, während die Strombegrenzung bei EVGs elektronisch geregelt wird.

Bekannte Hochspannungs-Zündgeräte verwenden häufig eine Schaltung, umfassend einen Zündübertrager, dessen Sekundärseite mit der zu zündenden Lampe und dessen Primärseite mit einer den Zündimpuls auslösenden Schaltung verbunden ist. Eine derartige Schaltung ist beispielsweise aus der DE-OS 195 31 622 bekannt, bei der der Schalter als SIDAC realisiert ist, der seinerseits über einen Transistor steuerbar ist. Ein weiteres Beispiel ist die Anmeldung PCT/IB96/00051, veröffentlicht unter WO 96/25022. Auch hier ist der Schalter ein SIDAC.

Für die einwandfreie Zündung einer Hochdruckentladungslampe wird in vielen Ländern als Norm typischerweise gefordert, daß der Zündimpuls 2 µs breit ist bei einer Spannung von 3,6 kV. Dieser Zündimpuls soll mit jeder Netzhalbwelle wiederholt werden, was einer Wiederholungsfrequenz von 100 bis 120 Hz entspricht. Um einen solchen Zündimpuls zu erzeugen ist eine große Induktivität nötig, was große Abmessungen des Zündübertragers erfordert. Zudem ist diese Vorgabe lediglich eine Mindestanforderung, die für eine erfolgreiche Zündung einer Hochdrucklampe notwendig ist.

Die Anforderungen an ein Zündgerät mit diesen Spezifikationen sind in der Praxis nicht ohne weiteres erfüllbar, da sowohl bei konventionellen Vorschaltgeräten als auch im besonderen bei elektronischen Vorschaltgeräten geeignete Induktivitäten groß sind und der Schaltaufwand nicht unerheblich ist. Erstens muß bei elektronischen Vorschaltgeräten ein Zündübertrager wegen der Integration in eine Schaltung klein sein. Zweitens darf er nur eine kleine Induktivität besitzen, um Geräusche beim Ummagnetisieren des Kernes im niederfrequenten Betrieb (NF-Betrieb) zu vermeiden und um die Kurvenform der Ausgangsspannung möglichst wenig zu verformen, denn bei elektronischen Vorschaltgeräten ist die Kurvenform der Ausgangsspannung meist rechteckförmig. Drittens ist der Preis für einen solchen Zündübertrager relativ hoch. Bei der Erzeugung der Zündimpulse mit den bisher verwendeten Schaltelementen (meist SIDACs) tritt bedingt durch Toleranzen dieser Schaltelemente, insbesondere von SIDACs, eine große Streuung der Zündspannung auf. Dem wurde durch bewußtes Überdimensionieren der Schaltelemente oder durch eine gezielte Selektion der verwendeten Bauteile Rechnung getragen. Mit SIDACs sind nur relativ niedrige Wiederholfrequenzen erreichbar und auch ihre Ansprechspannung ist problematisch.

Will man die Zündimpulsbreite von 2 µs unterschreiten, so ist entsprechend den obigen Anforderungen die Zeit zwischen den Einzelimpulsen auf weniger als 300 µs zu verkürzen, was einer Wiederholfrequenz von ca. 3 kHz entspricht. Wie Versuche gezeigt haben, sind die bisher im Zusammenhang vor allem mit EVGs zur Zündung von Hochdruckentladungslampen verwendeten Schaltelemente wie Funkenstrecke und SIDACs nur begrenzt für so kurze Zündimpulse geeignet. Es hat sich herausgestellt, daß bei ihrer Verwendung für schwer zündbare Lampen Einschaltverzögerungen bis zu 10 s auftreten.

### Darstellung der Erfindung

Demgemäß ist es Aufgabe der vorliegenden Erfindung, eine Zündschaltung zur Verfügung zu stellen, mit der auch schlecht zündende gattungsgemäße Lampen zuverlässig gezündet werden können.

Diese Aufgabe wird durch die kennzeichnenden Merkmale des Anspruch 1 gelöst. Dabei wird bei der erfindungsgemäßen Zündschaltung, vor allem in Verbindung mit einem EVG, die Zündimpulswiederholfrequenz auf mindestens 2 kHz angehoben wird, wobei die Impulsbreite bei 3,6 kV Zündspannung weniger als 0,5 µs beträgt. Dieses Verfahren verbindet die Vorteile einer Resonanzzündung, bei der ja auch Hochspannungsimpulse in rascher Reihenfolge generiert werden (bis über 100 kHz) mit dem niedrigen Leistungsverbrauch einer Impulszündung. Die hier vorgestellte Zündschaltung ist kostenneutral gegenüber den bisherigen Verfahren. Sie nimmt wenig Platz in Anspruch, somit ergibt sich die Möglichkeit der Integration. Sie kann einfach ein- und ausgeschaltet werden, besitzt eine hohe Lebensdauer wegen dem verwendeten Halbleiterschalter und ist von der Temperatur unabhängig (im üblichen Bereich der Betriebstemperatur). Die Höhe der Zündspannung ist nur von der zur Verfügung gestellten Ladespannung abhängig, die bei EVGs meist elektronisch geregelt ist.

Diese Zündschaltung kann man auch symmetrisch ausführen, d.h. an beiden Lampenanschlüssen steht ein entgegengesetzter Impuls zur Verfügung. Dies wird dadurch erreicht, daß die bisherige einzige Sekundärwicklung in zwei Wicklungen unterteilt wird.

Als weitere Anwendung ist eine Zündung zu sehen, die über die für die "Kaltzündung" erforderliche Spannung von 5 kV hinausgeht und unter Umständen sogar eine Heißzündung ermöglicht, bei der eine Zündspannung bis über 20 kV benötigt wird.

Diese Zündung eignet sich insbesondere für integrierte Zündschaltungen, die direkt an der Hochdrucklampe angebracht werden, aber auch für ein eigenständiges Zündgerät, das als Ersatz für die bisher verwendeten KVG-Zündgeräte zum Einsatz kommt.

Die vorliegende Erfindung hat große Vorteile gegenüber den bisher zur Zündung verwendeten Bauelementen. Bei Zündung unter Verwendung einer Funkenstrecke läßt sich die Wiederholfrequenz auf lediglich 500 Hz erhöhen. Bei noch höheren Frequenzen löscht die Funkenstrecke nicht mehr. Weiterhin ist an Funkenstrecken nachteilig, daß die Ansprechspannung eine gewisse unerwünschte Toleranz hat. Außerdem ist ihre Lebensdauer sehr begrenzt. Der hier angestrebte kurze Abstand zwischen den Einzelimpulsen ist somit unter Verwendung von Funkenstrecken nicht erreichbar. Ein Betrieb von Funkenstrecken in der Nähe der maximal zulässigen Wiederholfrequenz führt zu untragbaren Verzögerungszeiten beim Zünden der Hochdruckentladungslampen.

SIDACs wären zwar prinzipiell mit einer Wiederholfrequenz bis zu 3 kHz betreibbar, jedoch ergeben sich hierbei andere gravierende Nachteile. Zum einen variiert die Durchbruchspannung verschiedener SIDACs einer einzigen Serie um circa 20%, was zu einer entsprechenden Schwankung der Zündspannung und bei einem bestimmten Bruchteil der Zündschaltungen sogar zum Nichtschalten führt, andererseits ist eine aufwendige Beschaltung nötig, weil der SIDAC nicht mehr löschen kann, wenn der Haltestrom vom Ladestrom überschritten wird. Zündschaltungen mit SIDACs erfordern außerdem aufgrund der starken Temperaturabhängigkeit des Haltestroms aufwendige Vorkehrungen. Weiterhin fällt bei SIDACs der hohe Preis nachteilig ins Gewicht, da beispielsweise bei einem konventionellen Zündgerät bereits zwei SIDACs benötigt werden.

Besonders einfach lassen sich erfindungsgemäß Zündschaltungen unter Verwendung eines IGBT (Insulated Gate Bipolar Transistor) realisieren. Dieses Bauteil ist beispielsweise, in anderem Zusammenhang, in der nachveröffentlichten Anmeldung DE-OS 195 48 003 beschrieben. Dort wird der IGBT in Verbindung mit einem Sperrwandler eingesetzt.

Die Verwendung von IGBTs erlaubt eine Erhöhung der Wiederholfrequenz bis in eine Größenordnung von 3 kHz und mehr, wobei dadurch eine zuverlässige Zündung mit Impulsen, deren Dauer lediglich 180 ns und weniger beträgt, erzielt wird.

Die Verwendung eines IGBTs ermöglicht darüber hinaus die Erzeugung einer definierten Zündspannung, da der Zündimpuls durch Schalten der Kollektor-Emitter-Spannung U_{CE} des IGBT erzeugt wird. Bei Betrieb innerhalb der vorgesehenen Spezifikation ergibt sich eine hohe Lebensdauer, da kein Verschleiß (wie bei der Funkenstrecke) auftritt. Außerdem sind IGBTs relativ preisgünstig, verglichen mit SIDACs.

Selbst bei schlecht zündenden Lampen werden mit IGBTs lediglich Verzögerungszeiten von maximal 20 ms erzielt. Zum Vergleich: die Verzögerungszeiten bei Verwendung von SIDACs oder Funkenstrecken liegen im Sekundenbereich -.

Vorteilhafte Weiterbildungen der Erfindung sind in den vom Hauptanspruch abhängigen zusätzlichen Ansprüchen beschrieben.

### Figuren

Weitere Einzelheiten, Merkmale und Vorteile ergeben sich aus einem Ausführungsbeispiel, das im folgenden unter Hinweis auf die beigefügten Zeichnungen näher beschrieben wird. Es zeigen:
- Fig. 1: ein Prinzipschaltbild einer erfindungsgemäßen Schaltung,
- Fig. 2: ein Ausführungsbeispiel für die Schaltung zur Ansteuerung des IGBTs;
- Fig. 3: den zeitlichen Verlauf der Spannung am Gate des IGBT;
- Fig. 4: den zeitlichen Verlauf des Kollektorstroms IC sowie die Kollektor-Emitter-Spannung U_{CE} des IGBT sowie die entstehende Zündspannung U_{ign};
- Fig. 5: den Verlauf von Lampenstrom und Lampenspannung aufgetragen über der Zeit in der Umgebung eines Zündimpulses.

### Beschreibung der Zeichnungen

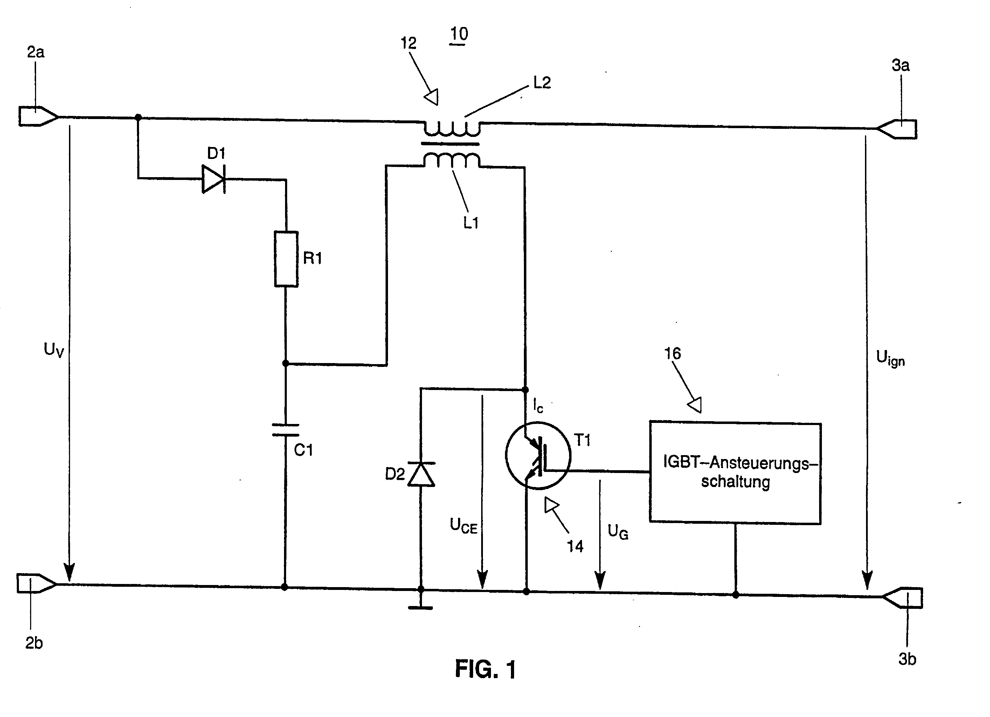

Die in Figur 1 dargestellte Zündschaltung 10 wird über ihre Eingangsklemmen 2a und 2b mit einer Versorgungsspannung U_{V} versorgt. Die Versorgungsspannung kann von einem KVG oder einem EVG zur Verfügung gestellt werden. An ihren Ausgangsklemmen 3a und 3b wird die zu zündende Hochdruckentladungslampe angeschlossen. Die an den Ausgangsklemmen abfallende Spannung wird als Zündspannung U_{ign} der Lampe bezeichnet.

Ein Zündübertrager 12 ist mit seiner Sekundärseite L₂ mit der zu zündenden Lampe verbunden. Seine Primärseite L₁ ist mit dem Ausgangskreis eines IGBT 14 sowie mit einem Kondensator C₁ verbunden. Unter Verwendung einer Wechselspannung U_{V} wird der Kondensator C₁ über eine Serienschaltung aus einer Diode D₁ und einem ohmschen Widerstand R₁ aufgeladen. In einem anderen Ausführungsbeispiel wird eine separate DC-Eingangsspannung zur Aufladung des Kondensators C₁ verwendet, so daß die Diode D₁ entfallen kann.

Dem IGBT 14 ist eine Freilaufdiode D₂ parallel geschaltet. Der Gate-Anschluß des IGBT 14 ist mit einer IGBT-Ansteuerschaltung 16 verbunden. Zur Erzeugung eines Zündimpulses erzeugt die IGBT-Ansteuerschaltung ein Signal, welches an den Gate-Anschluß des IGBT 14 angelegt wird und dazu führt, daß der IGBT schaltet, d.h. die Kollektor-Emitter-Spannung U_{CE} geht auf Null zurück, wodurch der Kondensator C₁ entladen wird. Hierdurch entsteht ein Impuls in der Primärseite L₁ des Zündübertragers 12, der entsprechend dem gewählten Übertragungsverhältnis an die Sekundärseite L₂ übertragen wird. Der auf der Sekundärseite L₂ entstehende Impuls wird als Zündspannung U_{ign} an die zu zündende Hochdruckentladungslampe gelegt.

Der Widerstand R, und der Kondensator C₁ werden entsprechend der gewünschten Wiederholfrequenz dimensioniert. In einer realisierten Ausführungsform betrug die Kapazität des Kondensators C₁ 68 nF, der Widerstand von R₁ war 2,2 kΩ. Die Versorgungsspannung U_{V} betrug 350 V Wechselspannung. Der gewählte IGBT hatte eine maximale Kollektor-Emitter-Spannung U_{CE} von ca. 600 V und einen maximalen Kollektorstrom I_{C} von ca. 20 A. Zum Einsatz gelangten IGBTs vom Typ IRGBC20S sowie IRGBC20U der Firma International Rectifier sowie der Typ BUP 401 der Firma Siemens. Ihre Wiederholfrequenz beträgt mindestens 2 kHz und die Impulsdauer weniger als 0,5 µs, vorzugsweise mindestens 2,8 kHz bzw. weniger als 0,25 µs.

Ein sehr gutes Zündverhalten wurde bei Wiederholfrequenzen von circa 3 kHz und Zündimpulsbreiten von circa 0,2 µs erreicht.

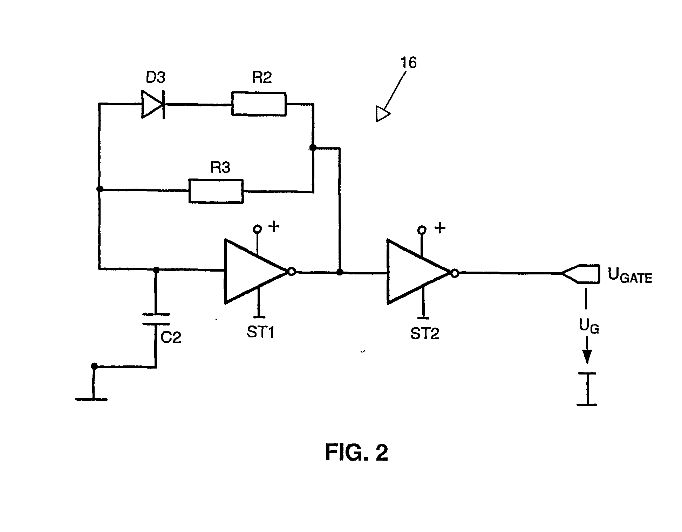

In Figur 2 ist eine Ausführungsform einer IGBT Ansteuerschaltung 16 näher dargestellt. Sie umfaßt einen Schmitt-Trigger-Inverter ST₁ mit einem Rückkopplungsnetzwerk bestehend aus der Parallelschaltung der Serienschaltung aus einer Diode D₃ und einem Widerstand R₂ zu einem Widerstand R₃. Der Eingang des Schmitt-Trigger-Inverters ST₁ liegt über einen Kondensator C₂ auf Masse. Der Ausgang von ST₁ ist mit einem weiteren Schmitt-Trigger-Inverter ST₂ verbunden, an dessen Ausgang die Gate-Spannung U_{G} für die Ansteuerung des IGBTs 14 zur Verfügung steht.

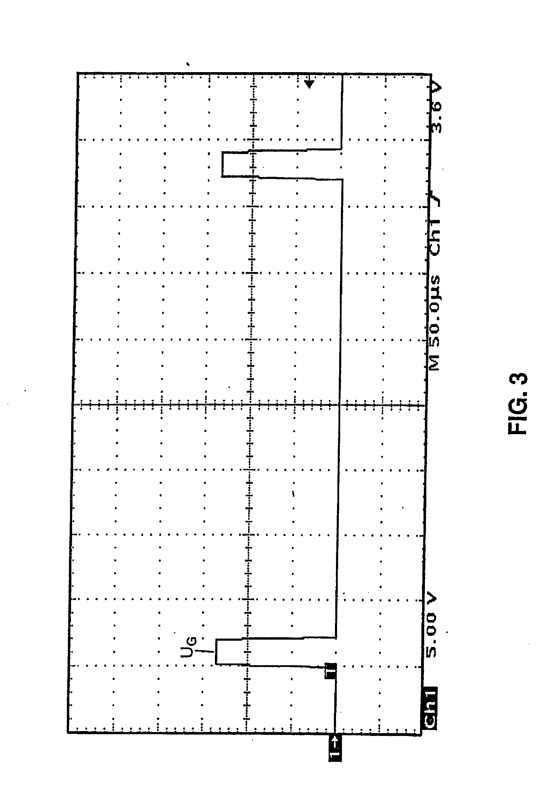

In Figur 3 ist der zeitliche Verlauf der Gate-Spannung U_{G} des IGBT beispielhaft dargestellt. Die Breite des Rechteckimpulses betrug in diesem Ausführungsbeispiel 20 µs, die Wiederholfrequenz lag bei ca. 2,5 kHz, während die maximale Spannung des Impulses etwa 13,6 V betrug.

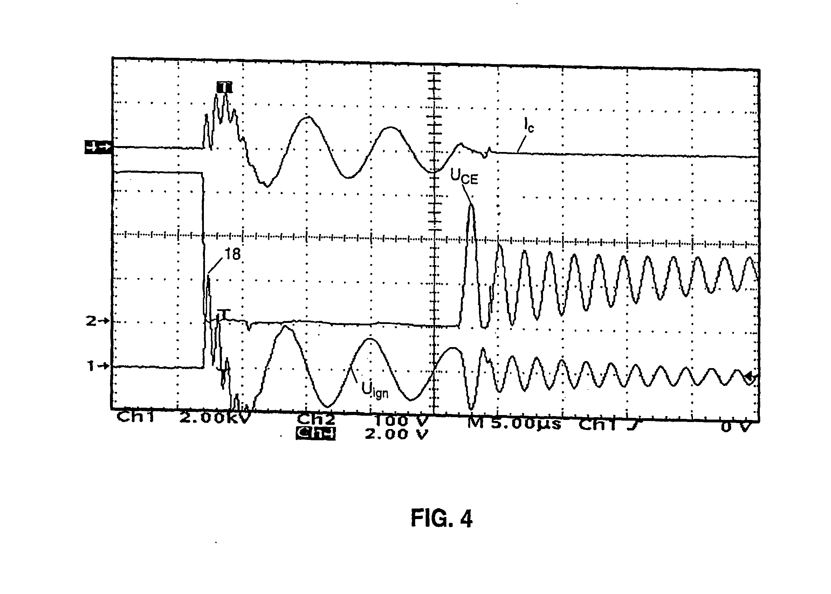

Die Figur 4 zeigt den zeitlichen Verlauf des Kollektorstroms I_{C} und der Kollektor-Emitter-Spannung U_{CE} des IGBTs 14 sowie der Zündspannung U_{ign} während eines Zündvorgangs, wobei hier anzumerken ist, daß für die Ermittlung dieser Zeitverläufe die Ausgangsklemmen der Zündschaltung offen geblieben waren. Besonders bemerkenswert ist die Dauer des mit Pfeil 18 gekennzeichneten Peaks der Zündspannung U_{ign}. Sie beträgt im vorliegenden Ausführungsbeispiel lediglich 190 ns.

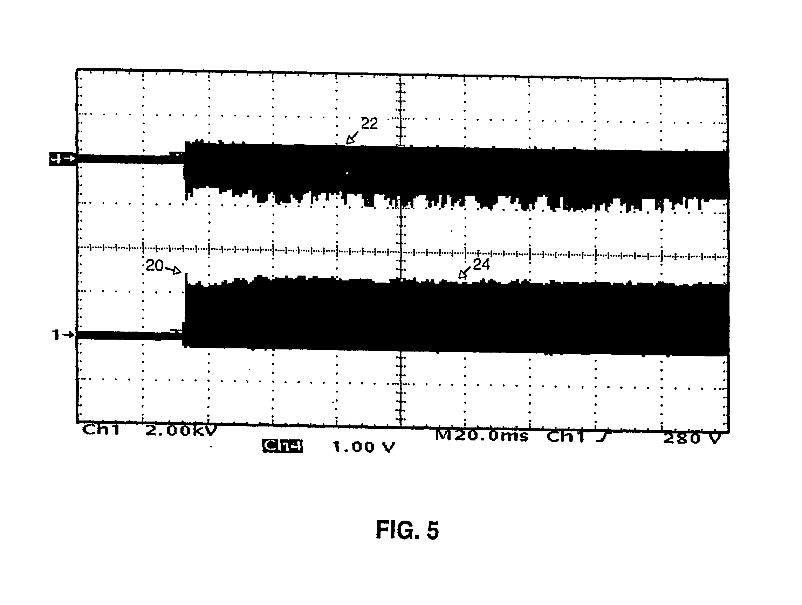

Die Figur 5 zeigt den zeitlichen Verlauf von Lampenstrom 22 und Lampenspannung 24 einer schwer zündbaren Hochdruckentladungslampe, die mit der oben beschriebenen Zündschaltung angesteuert wurde. Zu beachten ist insbesondere der Maßstab der Zeitachse (20 ms). Mit der erfindungsgemäßen Zündschaltung führte bereits der erste Zündimpuls (Pfeil 20) zur Zündung der Lampe. Gemäß dem Stand der Technik hätte der Zündvorgang demgegenüber mehrere Sekunden gedauert, also um einen Faktor Tausend länger.

## Patentansprüche

1. Schaltung zur Zündung einer Hochdruckentladungslampe, umfassend einen Zündübertrager (12), dessen Sekundärseite (L₂) mit der zu zündenden Lampe und dessen Primärseite (L₁) mit einer den Zündimpuls auslösenden Schaltung verbunden ist, wobei diese Schaltung einen Schalter für den Ladestrom des Zündkreises besitzt.
**dadurch gekennzeichnet,**
**daß** die den Zündimpuls auslösende Schaltung Zündimpulse mit einer Wiederholfrequenz von mindestens 2 kHz und einer Impulsdauer von weniger als 0,5 µs erzeugt unter Verwendung eines tripolaren, und somit fremdsteuerbaren Schalters (14) als einzigen Schalter in der den Zündimpuls auslösenden Schaltung.

2. Schaltung nach Anspruch 1,
**dadurch gekennzeichnet,**
**daß** dieser einzige tripolare Schalter ein IGBT (14) ist.

3. Schaltung nach Anspruch 2,
**dadurch gekennzeichnet,**
**daß** die den Zündimpuls auslösende Schaltung weiterhin eine Ansteuerschaltung (16) umfaßt, wobei die Ansteuerschaltung (16) zum Auslösen eines Zündimpulses ein Signal (UG) erzeugt und an den IGBT (14) anlegt, das den IGBT (14) schaltet.

4. Schaltung nach einem der vorhergehenden Ansprüche,
**dadurch gekennzeichnet,**
**daß** der IGBT (14) beim Schalten einen Kondensator (C1) entlädt, wobei die Primärseite (L₁) des Zündübertragers (12) mit dem Kondensator (C₁) und/oder dem Ausgangskreis des IGBT (14) verbunden ist.

5. Schaltung nach einem der vorhergehenden Ansprüche,
**dadurch gekennzeichnet,**
**daß** die den Zündimpuls auslösende Schaltung Zündimpulse mit einer Wiederholfrequenz von mindestens 2,8 kHz und einer Impulsdauer von weniger als 0,25 µs erzeugt.

6. Schaltung nach einem der vorhergehenden Ansprüche,
**dadurch gekennzeichnet,**
**daß** dem IGBT eine Freilaufdiode (D₂) parallel geschaltet ist.

7. Schaltung nach einem der vorhergehenden Ansprüche,
**dadurch gekennzeichnet,**
**daß** die Schaltung (10) aus einem konventionellen oder einem elektronischen Vorschaltgerät gespeist wird.

## Claims

1. Circuit for starting a high-pressure discharge lamp, comprising a starting transformer (12) whose secondary side (L₂) is connected to the lamp to be started, and whose primary side (L₁) is connected to a circuit triggering the starting pulse, this circuit having a switch for the charging current of the starting circuit, **characterized in that** the circuit triggering the starting pulse generates starting pulses with a repetition frequency of at least 2 kHz and a pulse duration of less than 0.5 µs using a tripolar, and therefore remotely controllable, switch (14) as a single switch in the circuit triggering the starting pulse.

2. Circuit according to Claim 1, **characterized in that** this single tripolar switch is an IGBT (14).

3. Circuit according to Claim 2, **characterized in that** the circuit triggering the starting pulse further comprises a driving circuit (16), it being the case that for the purpose of triggering a starting pulse the driving circuit (16) generates and applies to the IGBT (14) a signal (UG) which switches the IGBT (14).

4. Circuit according to one of the preceding claims, **characterized in that** upon switching the IGBT (14) discharges a capacitor (C1), the primary side (L₁) of the starting transformer (12) being connected to the capacitor (C₁) and/or the output circuit of the IGBT (14).

5. Circuit according to one of the preceding claims, **characterized in that** the circuit triggering the starting pulse generates starting pulses with a repetition frequency of at least 2.8 kHz and a pulse duration of less than 0.25 µs.

6. Circuit according to one of the preceding claims, **characterized in that** a freewheeling diode (D₂) is connected in parallel with the IGBT.

7. Circuit according to one of the preceding claims, **characterized in that** the circuit (10) is fed from a conventional or an electronic ballast.

## Revendications

1. Circuit d'amorçage d'une lampe à décharge à haute pression, comprenant un transformateur d'amorçage (12), dont le côté secondaire (L₂) est relié à la lampe à amorcer et dont le côté primaire (L₁) est relié à un circuit déclenchant l'impulsion d'amorçage, ce circuit comportant un interrupteur pour le courant de charge du circuit d'amorçage,
**caractérisé par le fait que** le circuit déclenchant l'impulsion d'amorçage produit des impulsions d'amorçage avec une fréquence de répétition d'au moins 2 kHz et avec une durée d'impulsion de moins de 0,5 µs en utilisant un interrupteur (14) tripolaire et donc pouvant être commandé de l'extérieur comme unique interrupteur dans le circuit déclenchant l'impulsion d'amorçage.

2. Circuit selon la revendication 1,
**caractérisé par le fait que** cet unique interrupteur tripolaire est un IGBT (14).

3. Circuit selon la revendication 2,
**caractérisé par le fait que** le circuit déclenchant l'impulsion d'amorçage comprend en outre un circuit de commande (16), le circuit de commande (16) produisant un signal (UG) pour déclencher une impulsion d'amorçage et l'appliquant à l'IGBT (14), lequel signal commute l'IGBT (14).

4. Circuit selon l'une des revendications précédentes,
**caractérisé par le fait que** l'IGBT (14) décharge un condensateur (C1) lors de la commutation, le côté primaire (L₁) du transformateur d'amorçage (12) étant relié au condensateur (C₁) et/ou au circuit de sortie de l'IGBT (14).

5. Circuit selon l'une des revendications précédentes,
**caractérisé par le fait que** le circuit déclenchant l'impulsion d'amorçage produit des impulsions d'amorçage avec une fréquence de répétition d'au moins 2,8 kHz et avec une durée d'impulsion de moins de 0,25 µs.

6. Circuit selon l'une des revendications précédentes,
**caractérisé par le fait qu'**une diode de roue libre (D₂) est branchée en parallèle avec l'IGBT.

7. Circuit selon l'une des revendications précédentes,
**caractérisé par le fait que** le circuit (10) est alimenté à partir d'un ballast classique ou d'un ballast électronique.
